Europäisches Patentamt

European Patent Office

Office européen des brevets

(19)

(11) Numéro de publication : **0 349 372 B1**

(12) # FASCICULE DE BREVET EUROPEEN

(45) Date de publication du fascicule du brevet :
**21.11.91 Bulletin 91/47**

(51) Int. Cl.$^5$ : **B23H 7/26, B23H 9/00**

(21) Numéro de dépôt : **89401687.2**

(22) Date de dépôt : **15.06.89**

(54) **Dispositif pour la commande du mouvement d'un outil tel que notamment une électrode d'érosion.**

(30) Priorité : **30.06.88 FR 8808812**

(43) Date de publication de la demande :
**03.01.90 Bulletin 90/01**

(45) Mention de la délivrance du brevet :
**21.11.91 Bulletin 91/47**

(84) Etats contractants désignés :
**AT BE CH DE ES GB GR IT LI LU NL SE**

(56) Documents cités :
**EP-A- 0 030 886**

(73) Titulaire : **Demoulin, André**
**Sainte Marie de Frugie**
**F-24450 La Coquille (FR)**

(72) Inventeur : **Demoulin, André**
**Sainte Marie de Frugie**
**F-24450 La Coquille (FR)**

(74) Mandataire : **Lerner, François et al**
**LERNER & BRULLE S.C.P. 5, rue Jules**
**Lefèbvre**
**F-75009 Paris (FR)**

## Description

L'invention a pour objet un dispositif pour la commande du mouvement d'un outil tel notamment qu'une électrode d'érosion.

Le dispositif objet de l'invention est du type comprenant une tige de commande susceptible de tourner à l'intérieur d'un tube se terminant par une face inclinée, ladite tige de commande se terminant par une chape dans laquelle s'articule un support sur lequel est fixé l'outil, ledit support ayant une forme de spatule à extrémité profilée, ladite extrémité profilée venant porter contre la face inclinée du tube. Un dispositif de ce type est décrit notamment au brevet européen 0030886 déposé le 5 Décembre 1980 au nom de EURATOM.

L'inconvénient du dispositif décrit à ce brevet est qu'il est relativement fragile en particulier au niveau de la chape qui subit des contraintes importantes lors de la transmission du mouvement de rotation à l'électrode et que le mouvement de l'outil est soumis à des vibrations défavorables au niveau notamment de l'usinage des pièces travaillées.

Selon l'invention le dispositif est perfectionné par le fait qu'en vue d'améliorer la cinématique du mouvement, la spatule comporte, faisant saillie sur son extrémité profilée, un bossage, sur lequel s'articule la chape de la tige de commande, pénétrant dans la chape et dans le tube de sorte que l'axe d'articulation de la spatule à l'intérieur de la chape est situé sensiblement au niveau du plan de la face inclinée du tube. Avec une telle modification du dispositif, l'outil travaille beaucoup plus rationnellement sans créer notamment de fatigue ni de vibrations au niveau de la tige centrale de commande, la chape au niveau de son articulation restant en effet guidée dans le palier formé par le tube dans lequel elle tourne, et étant ainsi en grande partie soulagée des contraintes de frottement de la spatule sur la face inclinée.

Avantageusement le bossage présente dans le plan de la spatule une forme sensiblement hémicirculaire, permettant ainsi une rotation complète avec le jeu adéquat du bossage à l'extrémité du tube dans toutes les orientations de l'outil.

L'invention et sa mise en oeuvre apparaîtront plus clairement à l'aide de la description qui va suivre faite en référence aux dessins annexés dans lesquels :

— les figures 1, 2 et 3 sont des vues reprises du brevet européen sus-mentionné 0030886 représentant respectivement :

•Figure 1 une vue latérale de la tête de commande de l'outil,

•Figure 2 une vue latérale du même outil mais tourné de 90° par rapport à la vue de la figure 1,

•Figure 3 une vue en coupe faite dans le plan III-III de la figure 2, ces trois figures illustrant la réalisation de l'art antérieur à laquelle l'invention apporte une perfectionnement ;

— la figure 4 montre comme la figure 1 une réalisation modifiée du dispositif de commande de l'outil conformément à l'invention ;

— la figure 5 montre comme la figure 3, mais avec la chape sortie du tube l'outil de commande modifié selon l'invention ;

— la figure 6 montre une vue à plus grande échelle du détail de la figure 5 au niveau indiqué VI de cette figure.

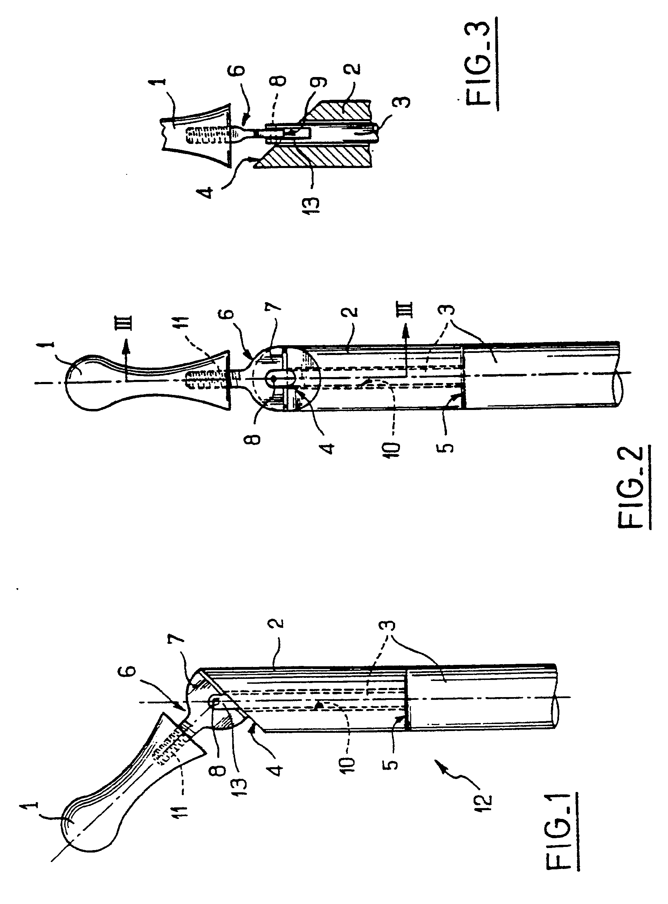

On fera tout d'abord référence aux figures 1, 2 et 3 illustrant l'art antérieur du brevet européen 0030886 dont on rappellera brièvement la constitution et le fonctionnement.

Le dispositif repéré dans son ensemble 12 pour la commande du mouvement d'un outil 1, tel notamment qu'une électrode d'érosion comprend essentiellement une tige de commande 3 susceptible de tourner à l'intérieur d'un tube 2 se terminant par une face inclinée 4. La tige 3 se termine par une chape 13 en forme de fourche dans laquelle s'articule au moyen d'un axe 8 une pièce en forme de spatule 7 dont l'extrémité 9 est profilée pour venir porter contre la face inclinée 4 du tube 2. En 10 a été repéré l'intérieur du tube 2 dans lequel tourne la tige de commande 3. Le tube 2 vient porter à sa partie inférieure sur l'épaulement annulaire 5 de la tige de commande 3. L'outil 1 est fixé, par exemple vissé comme illustré en 11 sur l'extrémité 6 de la spatule 7.

Comme indiqué au brevet sus-mentionné, des mouvements complexes de l'outil 1 peuvent être obtenus par des rotations conjuguées du tube 2 et de la tige 3 à des vitesses et dans des sens choisis.

Cependant, dans un tel mouvement, étant donné que l'axe d'articulation 8 de la chape 13 se situe nécessairement à l'extérieur du plan 4 de la face inclinée du tube 2, cet axe déporté par rapport à la face 4 et à l'alésage de guidage 10 du tube 2 a tendance à vibrer, de sorte que la cinématique du mouvement de l'outil laisse à désirer et que d'autre part le dispositif est fragile.

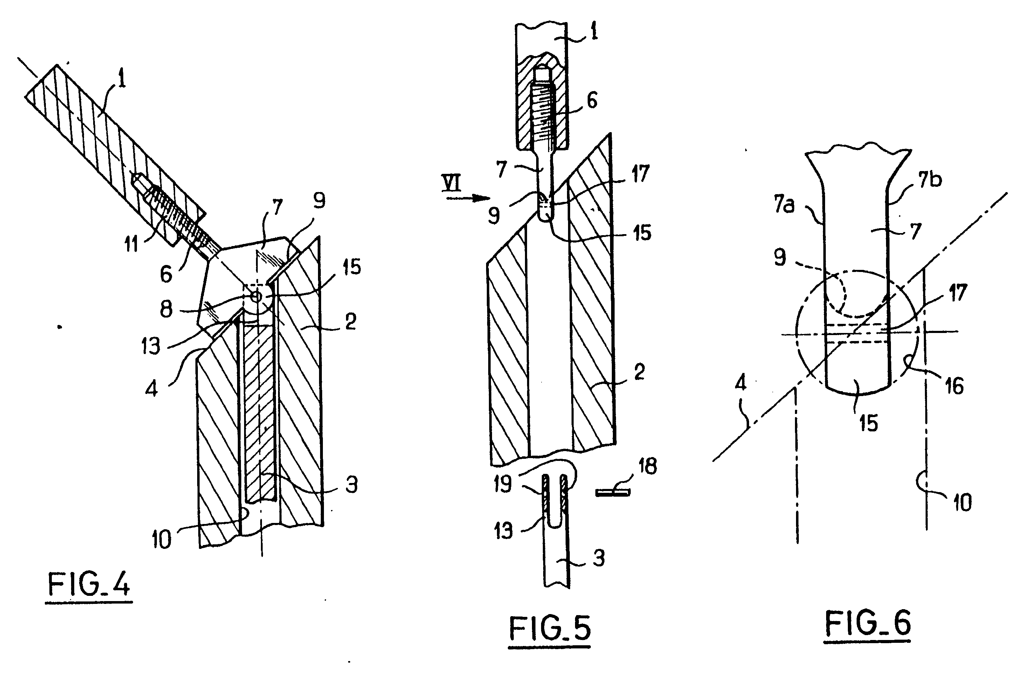

Conformément à l'invention, et comme illustré plus clairement aux figures 4 à 6, l'axe 8 d'articulation de la chape 13 sur la spatule 7 formant support de l'outil 1 est ramené dans le plan de la face inclinée 4 du tube 2 en prévoyant sur cette spatule 7 un bossage 15 faisant saillie par rapport à l'arête 9 de la spatule 7 venant porter sur la face inclinée 4 du tube. Ce bossage 15 a une configuration telle qu'il pénètre et tourne librement dans l'alésage 10 du tube 2. Et son épaisseur est telle qu'il pénètre également librement à l'intérieur de la chape 13. Comme il apparaît plus clairement notamment de la figure 6, le bossage 15 a avantageusement une forme sensiblement hémicirculaire s'inscrivant dans un cercle 16 de diamètre légèrement inférieur au diamètre de l'alésage 10, de sorte que le bossage peut tourner librement dans l'alésage 10 lors des mouvements de rotation relatifs de la tige 3 et du tube 2. Et le bossage 15 s'inscrit également à l'intérieur de la chape 13, présentant avantageusement sensiblement la même épaisseur que celle de la spatule 7. En d'autre terme, selon la réalisation illustrée à la figure 6 le bossage 15 se présente en volume sensiblement sous la forme d'une hémisphère ayant pour rayon celui du cercle 16 et qui serait rabotée selon les plans des faces 7a, 7b de la spatule 7.

Dans le bossage 15 est formé l'alésage 17 dans lequel s'articule l'axe 18 de solidarisation avec la chape 13 présentant les paliers en correspondance 19 comme il apparaît plus clairement à la figure 5.

Grâce à ces perfectionnements, l'axe d'articulation entre la chape 13 de la tige 3 et la spatule 7 support d'outil 1 est parfaitement guidé à l'intérieur de l'alésage 10 en restant au niveau du plan 4 de la face inclinée du tube 2, tandis que la chape 13 moins sujette à contraintes n'est plus soumise comme dans l'art antérieur à fatigue et vibrations excessives.

**Revendications**

1. Dispositif pour la commande du mouvement d'un outil (1) tel notamment qu'une électrode d'érosion du type comprenant une tige de commande (3) susceptible de tourner à l'intérieur d'un tube (2) se terminant par une face inclinée (4), ladite tige de commande se terminant par une chape (13) dans laquelle s'articule un support sur lequel est fixé l'outil, ledit support ayant une forme de spatule (7) à extrémité profilée (9), ladite extrémité profilée venant porter contre la face inclinée du tube, caractérisé en ce que ladite spatule comporte, faisant saillie sur son extrémité profilée, un bossage (15), sur lequel s'articule la chape de la tige de commande, pénétrant dans la chape (13) et dans le tube (2) de sorte que l'axe d'articulation de ladite spatule à l'intérieur de ladite chape est situé sensiblement au niveau du plan de la face inclinée (4) du tube.

2. Dispositif selon la revendication 1 caractérisé en ce que ledit bossage (15) présente dans le plan de la spatule une forme sensiblement hémicirculaire.

3. Dispositif selon la revendication 2 caractérisé en ce que ledit bossage (15) se présente en volume sensiblement sous la forme d'une hémisphère rabotée selon les plans des faces (7a, 7b) de la spatule (7).

**Claims**

1. Device for controlling the movement of a tool (1) in particular such as an erosion electrode of the type comprising a control rod (3) which can rotate inside a tube (2) ending in an inclined surface (4), the said control rod terminating in a yoke (13) in which there is articulated a carrier on which the tool is secured, the said carrier having the shape of a spatula (7) with a profiled end (9), the said profiled end bearing against the inclined surface of the tube, characterised in that the said spatula comprises, projecting from its profiled end, a boss (15), on which the control rod yoke is articulated and which enters the yoke (13) and into the tube (2) such that the shaft of articulation of the said spatula inside the said yoke is located substantially in the plane of the inclined surface (4) of the tube.

2. Device according to claim 1, characterised in that the said boss (15) is substantially semi-circular in the plane of the spatula.

3. Device according to claim 2, characterised in that the volume of the said boss (15) is substantially in the form of a hemisphere shaped according to the planes of the faces (7a, 7b) of the spatula (7).

**Patentansprüche**

1. Vorrichtung für die Steuerung eines Werkzeugs (1), insbesondere einer Erosionselektrode mit einer Steuerstange (3), die sich im Inneren eines Rohres (2), dessen oberes Ende (4) abgeschrägt ist, drehen kann, wobei das Ende der Steuerstange ein Gabelstück (13) ist, in dem eine Halterung zur Aufnahme des Werkstücks drehbar gelagert ist, wobei die Halterung die Form eines Spatels (7), dessen Ende (9) profiliert ist, aufweist, und wobei das profilierte Ende an der abgeschrägten Fläche des Rohres zur Anlage kommt, dadurch gekennzeichnet, daß der Spatel an seinem profilierten Ende einen Vorsprung (15) zur drehbaren Verbindung mit dem Gabelstück der Steuerstange aufweist, welcher in das Gabelstück (13) und das Rohr (2) hineinragt, so daß die Schwenkachse des Spatels in dem Gabelstück sich in etwa auf der Ebene der abgeschrägten Fläche (4) des Rohres befindet.

2. Vorrichtung nach Anspruch 1, dadurch gekennzeichnet, daß der Vorsprung (15) auf dem Ende des Spatels halbkreisförmig ausgeführt ist.

3. Vorrichtung nach Anspruch 2, dadurch gekennzeichnet, daß der Vorsprung (15) die Form einer Halbkugel aufweist, die entsprechend der geraden Seitenflächen (7a, 7b) des Spatels (7) geschnitten ist.

FIG_1

FIG_2

FIG_3

EP 0 349 372 B1

FIG. 4

FIG. 5

FIG. 6

EP 0 349 372 B1